# EUROPÄISCHE PATENTSCHRIFT

(11) **EP 1 685 143 B1**
(45) Veröffentlichungstag und Bekanntmachung des Hinweises auf die Patenterteilung: **28.11.2007**
(21) Anmeldenummer: 04790737.3
(22) Anmeldetag: 22.10.2004
(51) Int. Cl.: C07F 9/535

(54) **VERFAHREN ZUR HERSTELLUNG VON MONO- UND BIS(FLUORALKYL) PHOSPHORANEN UND DEN KORRESPONDIERENDEN S UREN UND PHOSPHATEN**
METHOD FOR THE PRODUCTION OF MONO(FLUOROALKYL)PHOSPHORANES, BIS(FLUOROALKYL)PHOSPHORANES, AND THE CORRESPONDING ACIDS AND PHOSPHATES
PROCEDE DE PRODUCTION DE MONO- ET BIS(FLUOROALKYL)PHOSPHORANES ET D'ACIDES ET DE PHOSPHATES CORRESPONDANTS

(30) Priorität: 17.11.2003 DE 10353759
(43) Veröffentlichungstag der Anmeldung: 02.08.2006
(73) Patentinhaber: Merck Patent GmbH, 64271 Darmstadt (DE)
(72) Erfinder: IGNATYEV, Nikolai-(Mykola), 47058 Duisburg (DE); WELZ-BIERMANN, Urs, 64646 Heppenheim (DE); SCHMIDT, Michael, 64342 Seeheim-Jugenheim (DE); KUCHERYNA, Andriy, 42117 Wuppertal (DE); WILLNER, Helge, 45481 Mülheim/Ruhr (DE)
(86) Internationale Anmeldenummer: PCT/EP2004/011940
(87) Internationale Veröffentlichungsnummer: WO 2005/049628

(56) Entgegenhaltungen:
- GB-A- 734 187

## Beschreibung

Die vorliegende Erfindung betrifft ein Verfahren zur Herstellung von Mono(fluoralkyl)- oder Bis(fluoralkyl)phosphorsäuren, Mono(fluoralkyl)- oder Bis(fluoralkyl)phosphaten und deren korrespondierenden Phosphoranen.

Ein im Stand der Technik bekanntes Verfahren zur Synthese von Fluoralkylphosphoranen basiert auf der elektrochemischen Simons Fluorierung (ECF) von Alkylphosphinen (N. Ignatyev, P. Satori, J. of Fluorine Chem., 103 (2000) 57-61; WO 00/21969) und eignet sich aufgrund der hohen Ausbeuten insbesondere für die Synthese von Tris(fluoralkyl)difluor-phosphoranen. Bei der elektrochemischen Fluorierung von Dialkylphosphinen mit kurzen Alkylketten (mit weniger als C₄) ist die Ausbeute der korrespondierenden perfluorierten Phosphorane deutlich geringer.

Die Tris(fluoralkyl)difluor-phosphorane können als Ausgangsmaterialien für die Synthese von verschiedenen Phosphaten (WO 98/15562, DE 196 41 138, EP 1 127 888) sowie einer neuen Tris(fluoralkyl)trifluor-phosphorsäure (DE 101 30 940) genutzt werden. Diese Säure kann nicht nur für die Synthese verschiedener Salze genutzt werden, sondern kann auch in die korrespondierende Bis(fluoralkyl)-phosphinsäure hydrolysiert werden (DE 102 169 97). Bis(fluoralkyl)-phosphin- und Fluoralkyl-phosphonsäure sowie deren Salze können auch durch Hydrolyse von Tris(fluoralkyl)difluor-phosphoranen erhalten werden (DE 102 169 95).

Ein im Stand der Technik bekanntes Verfahren zur Herstellung von Mono(perfluoralkyl)- und Bis(perfluoralkyl)fluor-phosphoranen ist ferner eine Mehrstufenreaktion basierend auf der Reaktion zwischen Phosphor und Perfluoralkylhalogeniden, die sehr teuer sind (T. Mahmood, J.M. Shreeve, Inorg. Chem., 25 (1986) 3128). Diese Umsetzung benötigt häufig hohe Drücke und Temperaturen.

Trifluormethylphosphoran wird bei der Umsetzung von (CF₃)₂Cd mit PF₅ oder PCl₅ gebildet (R. Eujen, R. Haiges, Z. Naturforsch., 53b (1998) 1455). Bevorzugt wird bei dieser Reaktion jedoch Tris(trifluormethyl)-phosphoran gebildet, während CF₃PF₄ und (CF₃)₂PF₃ in der Reaktionsmischung nur NMR-spektroskopisch nachgewiesen wurden. Ein weiterer Nachteil dieser Reaktion ist die Verwendung des instabilen donor-freien (CF₃)₂Cd, das in mehreren Schritten aus dem teueren CF₃l hergestellt werden muss.

GB-A-734187 offenbart die Herstellung von Methylfluorphosphoran aus einer Komplexverbindung der Formel MePCl₃•AlCl₄ und wasserfreiem HF in einem Autoklaven.

Mono(pentafluorphenyl)- und Bis(pentafluorphenyl)fluor-phosphorane können in einer Mehrstufenreaktion hergestellt werden, bei der der erste Schritt eine Umsetzung von Pentafluorphenylmagnesiumbromid mit PCl₃ (M. Fild, O. Glemser, I. Hollenberg, Z. Naturforsch., 21b (1966) 920; D.D. Magnelly, G. Tesi, J.U. Lowe, W.E. McQuistion, Inorg. Chem., 5 (1966) 457; R.M.K. Deng, K.B. Dillon, W.S. Sheldrick, J. Chem. Soc. Dalton Trans. 1990, 551) oder mit PBr₃ ist (A.H. Cowley, R.P. Pinnell, J. Am. Chem. Soc. 88 (1966) 4533; R. Ali, K.B. Dillon, J. Chem. Soc. Dalton Trans. 1990, 2593). Die erhaltene Mischung von Mono(pentafluorphenyl)- und Bis(pentafluorphenyl)chlor- bzw. -bromphosphin kann mittels fraktionierter Destillation aufgetrennt werden und durch Reaktion mit Cl₂ und anschließender Umsetzung mit AsF₃ oder SbF₃ werden die entsprechenden Fluorphosphorane gebildet (M. Fild, R. Schmutzler, J. Chem. Soc. (A) 1969, 840).
Des Weiteren werden im Stand der Technik einige Synthesen von Mono(pentafluorethyl)- und Bis(pentafluorethyl)fluorphosphaten beschrieben, die aber alle auf sehr teueren Ausgangsmaterialien beruhen und daher wirtschaftlich nicht durchführbar sind (zum Beispiel N.V. Pavlenko, L.M. Ygupolskii, Zh. Org. Khim (russ.) 59 (1989) 528; S.S. Chan, C.J. Willis, Can. J. Chem. 46 (1968) 1237; J. Jander, D. Börner, U. Engelhardt, Liebigs Ann. Chem., 726 (1969) 19).

Aufgabe der vorliegenden Erfindung ist es, ein technisches und wirtschaftlich vorteilhaftes Verfahren zur Herstellung von Mono(fluoralkyl)- und Bis(fluoralkyl)-phosphaten und deren korrespondierenden Phosphoranen anzugeben, das insbesondere gute Ausbeuten aufweist sowie einfacher und kostengünstiger ist als die aus dem Stand der Technik bekannten Verfahren.

Diese Aufgabe wird erfindungsgemäß durch die kennzeichnenden Merkmale des Hauptanspruchs und der nebengeordneten Ansprüche gelöst.

Die Erfindung zeichnet sich dadurch aus, dass Bis(fluoralkyl)-phosphin- oder Fluoralkyl-phosphonsäure oder deren Salze oder Derivate durch einfache Umsetzung mit wasserfreiem Fluorwasserstoff (HF) die korrespondierenden Fluoralkyl-phosphorsäuren mit anschließender Salzbildung oder direkt die Fluoralkyl-phosphate in guten Ausbeuten bilden. Die Mono(fluoralkyl)- oder Bis(fluoralkyl)-phosphate können dann nachfolgend durch die Behandlung mit starken elektrophilen Reagenzien oder starken Lewis-Säuren in die korrespondierenden Phosphorane überführt werden.

Mono(fluoralkyl)- und Bis(fluoralkyl)-phosphate im Sinne der vorliegenden Erfindung sind Verbindungen, bei denen der Phosphor neben der einen oder den zwei Fluoralkylgruppen fünf bzw. vier Fluoratome trägt. Es handelt sich bei den erfindungsgemäß hergestellten Mono- und Bis(fluoralkyl)-phosphaten daher um Mono(fluoralkyl)pentafluor- und Bis(fluoralkyl)tetrafluor-phosphate. Die korrespondierenden erfindungsgemäß hergestellten Phosphorane enthalten dementsprechend vier bzw. drei Fluoratome, die direkt mit dem Phosphoratom verbunden sind. Fluoralkylgruppen im Sinne der vorliegenden Erfindung sind geradkettige oder verzweigte Alkyl- oder Cycloalkylgruppen, die fluoriert sind und die keine, eine, zwei oder drei Doppelbindungen enthalten.

Fluorierte Alkylgruppen sind beispielsweise Difluormethyl, Trifluormethyl, Pentafluorethyl, Pentafluorpropyl, Heptafluorpropyl, Pentafluorbutyl, Heptafluorbutyl, Nonafluorbutyl, C₅H₄F₇, C₅H₂F₉, C₅F₁₁, C₆H₄F₉, C₆H₂F₁₁, C₆F,₃, C₇H₄F₁₁, C₇H₂F₁₃, C₇F₁₅, C₈H₄F₁₃, C₈H₂F,₅, C₈F₁₇, C₉H₄C₁₅, C₉H₂C₁₇, C₉F₁₉, C₁₀H₄F₁₇, C₁₀H₂F₁₉, C₁₀F₂₁, C₁₁H₄F₁₉, C₁₁H₂F₂₁, C₁₁F₂₃, C₁₂H₄F₂₁, C₁₂H₂F₂₃ oder C₁₂F₂₅. Perfluoralkylgruppe bedeutet, dass alle H-Atome der Alkylgruppe, wie zuvor beschrieben, durch F-Atome ersetzt sind. Die fluorierten Alkylgruppen können ferner ein, zwei oder drei Doppelbindungen enthalten, beispielsweise entsprechend fluoriertes Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis-C₂₀H₃₉. Fluoriert bedeutet, dass in einer Perfluoralkyl- oder Perfluorcycloalkylgruppe 1 bis 4 Fluoratome durch Wasserstoffatome ersetzt sind.
Unter Cycloalkylgruppen versteht man beispielsweise gesättigte oder teilweise oder vollständig ungesättigte Cycloalkylgruppen mit 3-7 C-Atomen, wie Cyclopropyl, Cyclobutyl, Cyclopentyl, Cyclohexyl, Cycloheptyl, Cyclopentenyl, Cyclopenta-1,3-dienyl, Cyclohexenyl, Cyclohexa-1,3-dienyl, Cyclohexa-1,4-dienyl, Phenyl, Cycloheptenyl, Cyclohepta-1,3-dienyl, Cyclohepta-1,4-dienyl oder Cyclohepta-1,5-dienyl, die entsprechend fluoriert sind und welche mit C₁- bis C₆-Alkylgruppen substituiert sein können, wobei wiederum die Cycloalkylgruppe und die mit C₁- bis C₆-Alkylgruppen substituierte Cycloalkylgruppe fluoriert vorliegt.

Das erfindungsgemäße Verfahren zur Herstellung von Mono- oder Bis(fluoralkyl)-phosphaten und deren korrespondierenden Phosphoranen umfasst somit zumindest die Umsetzung von einer Bis(fluoralkyl)-phosphinsäure oder einer (Fluoralkyl)phosphonsäure oder einem korrespondierenden Derivat dieser Säuren mit wasserfreiem Fluorwasserstoff.

Die Herstellung der Bis(fluoralkyl)-phosphinsäuren und der (Fluoralkyl)phosphonsäuren sowie der korrespondierenden Derivate dieser Säuren kann nach üblichen, dem Fachmann bekannten Methoden erfolgen. Vorzugsweise werden diese Verbindungen durch Hydrolyse von Tris(fluoralkyl)-phosphinoxiden, Tris-, Bis- oder Mono(fluoralkyl)-phosphoranen, Tris-, Bis- oder Mono(fluoralkyl)-phosphorsäuren oder Anhydriden oder Halogenanhydriden von Bis(fluoralkyl)-phosphinsäuren und (Fluoralkyl)phosphonsäuren (vgl. zum Beispiel DE 102 169 97 und DE 102 169 95) oder durch Umsetzung dieser Verbindungen mit Alkoholen bzw. Alkoholaten oder Aminen hergestellt. Die Ester von Fluoralkylphosphonsäuren mit Doppelbindungen in der Kohlenstoffkette können beispielsweise durch Umsetzung von Perfluorolefinen mit Trialkylphosphiten hergestellt werden (Knunjanz et al., Dokl. Akad. Nauk. SSR, 129 (1959) 576-577). Die entsprechenden Beschreibungen werden hiermit als Referenz eingeführt und gelten als Teil der Offenbarung.

Erfindungsgemäß können auch Mischungen aus zwei oder mehr Bis(fluoralkyl)-phosphinsäuren und/oder zwei oder mehr (Fluoralkyl)phosphonsäuren und/oder zwei oder mehr korrespondierenden Derivaten dieser Säuren verwendet werden. Vorzugsweise wird in dem erfindungsgemäßen Verfahren jeweils nur eine Bis(fluoralkyl)-phosphinsäure oder eine (Fluoralkyl)phosphonsäure oder ein korrespondierendes Derivat dieser Säuren umgesetzt.

Die erfindungsgemäß verwendeten Bis(fluoralkyl)-phosphinsäuren oder deren korrespondierende Derivate besitzen zwei Fluoralkylgruppen, wie zuvor beschrieben, die gleich oder verschieden sind. Bevorzugt werden Bis(fluoralkyl)phosphinsäuren oder deren korrespondierende Derivate mit jeweils gleichen Fluoralkylgruppen verwendet.

In einer bevorzugten Ausführungsform des erfindungsgemäßen Verfahrens wird eine Bis(perfluoralkyl)phosphinsäure oder eine (Perfluoralkyl)phosphonsäure oder ein korrespondierendes Derivat dieser Säuren eingesetzt, bei dem die Perfluoralkylgruppen 1 bis 20 C-Atome enthalten und geradkettig oder verzweigt sind. Besonders bevorzugt sind Edukte, deren Perfluoralkylgruppen 1 bis 12 C-Atome besitzen, wie zuvor beschrieben. Ganz besonders bevorzugt ist Pentafluorethyl, Nonafluorbutyl oder Perfluoroprop-1-enyl.

Als bevorzugtes Derivat der Bis(fluoralkyl)phosphinsäure oder der (Fluoralkyl)phosphonsäure wird für das erfindungsgemäße Verfahren ein Salz mit einem ein-, zwei- oder dreiwertigen Metall-Kation eingesetzt. Die erfindungsgemäß besonders bevorzugten Metallkationen sind ausgewählt aus der Gruppe Li⁺_{,} Na⁺, K⁺, Mg²⁺, Ca²⁺, Ba²⁺, Zn²⁺, CU²⁺ oder Al³⁺.

Alternativ wird als bevorzugtes Derivat der Bis(fluoralkyl)phosphinsäure oder der (Fluoralkyl)phosphonsäure für das erfindungsgemäße Verfahren ein Salz mit einem ein- oder zweiwertigen organischen Kation eingesetzt. Besonders bevorzugt sind organische Kationen, die mindestens ein Stickstoffatom enthalten und/oder die cyclisch sind. Die erfindungsgemäß ganz besonders bevorzugten organischen Kationen sind ausgewählt aus der Gruppe Tetraalkylammonium, Tetraalkylphosphonium, Triarylalkylphosphonium, Guanidinium, Pyrrolidinium, Pyridinium, Imidazolium, Piperazinium oder Hexamethylendiammonium.

Des Weiteren wird für das erfindungsgemäße Verfahren als Derivat der Bis(fluoralkyl)phosphinsäure oder der (Fluoralkyl)phosphonsäure ein Salz mit einem Polykation eingesetzt. Erfindungsgemäß besonders bevorzugt ist dieses Polykation ein Polyammonium-Kation, beispielsweise protonierte Polyethylenimine.

Als weiteres bevorzugtes Derivat sind für das erfindungsgemäße Verfahren die Ester der Bis(fluoralkyl)phosphinsäure oder der (Fluoralkyl)phosphonsäure geeignet. Es entsehen zunächst die Mono(fluoralkyl)- oder Bis(fluoralkyl)-phosphorsäuren, die dann durch Salzbildung in die entsprechenden Phosphate umgewandelt werden können. Verfahren zur Salzbildung sind dem Fachmann hinlänglich bekannt, beispielsweise die Umsetzung der Phosphorsäure mit einem Chlorid, Bromid, Iodid, Methylsulfonat, Methylsulfat, Perchlorat, Tetrafluorborat, Acetat, Trifluormethylcarboxylat, Trifluormethylsulfonat oder Carbonat, bevorzugt mit einem Chlordi, Bromid, Methylsulfonat oder Trifluormethylsulfonat und einem der Kationen, wie zuvor beschrieben.

Als Reaktionsmedium eignet sich für das erfindungsgemäße Verfahren ein übliches, dem Fachmann bekanntes polares Lösungsmittel. Alternativ kann das erfindungsgemäße Verfahren auch ohne Lösungsmittel, d.h. in wasserfreiem Fluorwasserstoff durchgeführt werden. Ohne Einschränkung der Allgemeinheit wird als polares Lösungsmittel besonders bevorzugt Dichlormethan, Diethylether, Diethylcarbonat, Dioxan oder eine Mischung davon verwendet, direkt nach der Umsetzung mit wasserfreiem HF können auch die Lösungsmittel Waser oder Alkohole verwendet werden.

Die Temperatur, bei der die Umsetzung erfindungsgemäß bevorzugt durchgeführt wird, liegt zwischen -20° C und 100° C. Besonders bevorzugt wird die Umsetzung bei einer Temperatur von 0° C bis Raumtemperatur durchgeführt.

In einer bevorzugten Variante des erfindungsgemäßen Verfahrens wird eine 4 bis 100-fache Menge von Fluorwasserstoff bezogen auf die molare Menge der Bis(fluoralkyl)-phosphinsäure oder der (Fluoralkyl)phosphonsäure oder des korrespondierenden Derivates dieser Säuren verwendet. Besonders bevorzugt ist eine 5- bis 25-fache molare Menge an Fluorwasserstoff.

In einer weiteren Ausführungsform des erfindungsgemäßen Verfahrens wird das nach der Umsetzung mit Fluorwasserstoff entstandene Mono- oder Bis(fluoralkyl)phosphat mit einem starken elektrophilen Reagenz oder einer starken Lewissäure umgesetzt.

Die Auswahl eines geeigneten elektrophilen Reagenz oder einer Lewissäure bereitet dem Fachmann keinerlei Schwierigkeiten. Insbesondere bevorzugt wird elektrophiles Reagenz oder als Lewissäure erfindungsgemäß (CH₃)₃SiCl, SO₂Cl₂, SbF₅, AlCl₃, VF₅, SbCl₅, NbF₅, AsF₅, BiF₅, AlF₃, TaF₅ oder eine Mischung davon eingesetzt.

Bei dem erfindungsgemäßen Verfahren handelt es sich vorteilhafterweise um einen einstufigen Prozess, der kostengünstig und einfach durchzuführen ist. Darüber hinaus kann auf die Verwendung teuerer Reagenzien verzichtet werden; so kann beispielsweise HF anstelle von SF₄ und AlCl₃ statt Cl₂ + SbF₃ eingesetzt werden.

Die vollständige Offenbarung aller vor- und nachstehend aufgeführten Anmeldungen, Patente und Veröffentlichungen ist durch Bezugnahme in diese Anmeldung eingeführt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die NMR-Spektren wurden an Lösungen in deuterierten Lösungsmitteln bei 20° C an einem Bruker Avance 300 Spektrometer mit einem 5 mm Breitbandkopf ¹H/BB mit Deuterium Lock gemessen. Die Messfrequenzen der verschiedenen Kerne sind: ¹H: 300,13 MHz, ¹⁹F: 282,41 MHz und ³¹P: 121,49 MHz. Die Methode der Referenzierung wird bei jedem Spektrum bzw. bei jedem Datensatz separat angegeben.

### Beispiele:

### Beispiel 1:

5.364 g (17.4 mmol) Lithium-Bis(pentafluorethyl)phosphinat in 15 cm³ trockenem Diethylether werden mit einem Eisbad gekühlt und mit 8.0 g (400 mmol) Fluorwasserstoff (HF) versetzt. Die Reaktionsmischung wird zwei Stunden bei 0° C gerührt und dann in 20 cm³ Eiswasser geschüttet. Die etherische Phase wird abgetrennt und dreimal mit 10 cm³ Wasser gewaschen. Die etherische Lösung wird mit Magnesiumsulfat getrocknet und mit ¹H und ¹⁹F NMR Spektroskopie untersucht, die die Bildung von Tetrafluorbis(pentafluorethyl)-phosphorsäure als Komplex mit Diethylether bestätigen.

¹⁹F NMR (Referenz: CCl₃F - interner Standard; Lösungsmittel: CD₃CN-Film) : -72.13 dm (¹J_{P,F} = 925 Hz; PF₄); -82.80 quinm (⁴J_{F,F} = 7.5 Hz; ³J_{P;F} = 2.4 Hz; 2CF₃); -119.06 d,quin,m (²J_{P,F} = 104 Hz; ³J_{F;F} = 9.2 Hz; 2CF₂). ³¹P NMR (Referenz: 85% H₃PO₄ in D₂O; Lösungsmittel: CD₃CN): -149.15 quin,quin,m; ¹J_{P,F} = 925 Hz; ² J_{P,F} = 104 Hz; ³J_{P;F} = 2.3 Hz.

### Beispiel 2:

1.329 g (4.3 mmol) Lithium-Bis(pentafluorethyl)phosphinat in 10.5 cm³ trockenem Diethylcarbonat werden mit einem Eisbad gekühlt und mit 2.0 g (100 mmol) Fluorwasserstoff (HF) versetzt. Die Reaktionsmischung wird eine halbe Stunde bei 0° C gerührt und dann wird das Lösungsmittel im Vakuum von 1.3 Pa bei 70° C (Ölbad) entfernt. Der Rest wird mit ¹H und ¹⁹F NMR Spektroskopie untersucht, die die Bildung von Tetrafluorbis(pentafluorethyl)phosphorsäure als Komplex mit Diethylcarbonat bestätigen.

¹⁹F NMR (Referenz: CCl₃F - interner Standard; Lösungsmittel: CD₃CN-Film) : -72.44 d,m (¹J_{P,F} = 925 Hz; PF₄); -82.93 quin,m (⁴J_{F,F} = 7.2 Hz; 2CF₃); -119.11 d,quin,m (²J_{P,F} = 104 Hz; ³J_{F;F} = 9.2 Hz; 2CF₂). ³¹P NMR (Referenz: 85% H₃PP₄ in D₂O; Lösungsmittel: CD₃CN): -147.58 quin,quin,m; ¹J_{P,F} = 925 Hz; ²J_{P,F} = 104 Hz.

### Beispiel 3:

3.779 g (11.11 mmol) Kalium-bis(pentafluorethyl)phosphinat in 20 cm³ trockenem Dioxan werden mit einem Eisbad gekühlt und mit 5.0 g (249.9 mmol) Fluorwasserstoff (HF) versetzt. Die Reaktionsmischung wird eine halbe Stunde bei 0° C gerührt und dann wird das Lösungsmittel im Vakuum von 1.3 Pa bei 50° C (Ölbad) entfernt. Der Rest, 4.146 g eines weißen festen Materials, wird mit ¹⁹F NMR Spektroskopie untersucht, die die Bildung von Kalium-tetrafluorobis(pentafluorethyl)phosphat bestätigt. Die Ausbeute an K[(C₂F₅)₂PF₄] ist 97.2 %.

¹⁹F NMR (Referenz: CCl₃F - interner Standard; Lösungsmittel: CD₃CN-Film) : -71.70 d,m (¹J_{P,F} = 917 Hz; PF₄); -82.35 quinm (⁴J_{F,F} = 7.3 Hz; ³J_{P;F} = 2.4 Hz; 2CF₃); -119.28 d,quin,m (^{2J}_{P,F} = 101 Hz; ³J_{F;F} = 9.1 Hz; ³J_{F;F} = 1,2 Hz; 2CF₂).
³¹P NMR (Referenz: 85% H₃PO₄ in D₂O; Lösungsmittel: CD₃CN): -150.40 quin,quin,m; ¹_{JP,F} =917 Hz; ²_{JP,F} = 101 Hz; ³J_{P;F} = 2.4 Hz.

### Beispiel 4:

1.048 g (2.43 mmol) Tetraethylammonium-bis(pentafluorethyl)phosphinat werden mit einem Eisbad gekühlt und mit 2.5 g (124.9 mmol) Fluorwasserstoff (HF) versetzt. Die Reaktionsmischung wird 15 Minuten bei 0° C gerührt und dann in 20 cm³ Eiswasser geschüttet. Der Niederschlag wird abfiltriert, zweimal mit 10 cm³ Wasser gewaschen und an der Luft getrocknet. 1.028 g eines weißen festen Materials werden erhalten. ¹H und ¹⁹F NMR Spektroskopie bestätigen die Bildung von Tetraethylammonium-tetrafluorobis(pentafluorethyl)phosphat. Die Ausbeute an [[C₂H₅)₄N] [(C₂F₅)₂PF₄] ist 89.0 % (Schmelzpunkt 201-202° C).

¹⁹F NMR (Referenz: CCl₃F - interner Standard; Lösungsmittel: CD₃CN) : -71.62 dm (PF₄); -82.30 quin,d,t (2CF₃); -119.06 d,quin,q (2CF₂); ¹J_{P,F} = 916 Hz; ²J_{P,F} = 101 Hz; ³J_{P,F} = 2.4 Hz; ³J_{F,F} = 9.2 Hz; ³J_{F,F} = 1.1 Hz; ⁴J_{F,F} = 7.4 Hz.
¹H NMR (Referenz: TMS ; Lösungsmittel: CD₃CN) : 1.21 t,m (4CH₃); 3.16 q (4CH₂); ³J_{H,H} = 7.3 Hz.
³¹P NMR (Referenz: 85 % H₃PO₄ in D₂O ; Lösungsmittel: CD₃CN) : -150.48 quin,quin,m; ¹J_{P,F} = 916 Hz; ²J_{P,F} = 101 Hz; ³J_{P,F} = 2.2 Hz.

### Beispiel 5:

4.116 g (9.97 mmol) 1-Ethyl-3-methylimidazolium-bis(pentafluorethyl)phosphinat werden mit einem Eisbad gekühlt und mit 5.0 g (250 mmol) Fluorwasserstoff (HF) versetzt. Die Reaktionsmischung wird 15 Minuten bei 0° C gerührt und dann in 20 cm³ Eiswasser geschüttet. Der Niederschlag wird abfiltriert, zweimal mit 10 cm³ Wasser gewaschen und an der Luft getrocknet. 4.208 g eines weißen festen Materials werden erhalten. ¹H, ³¹P und ¹⁹F NMR Spektroskopie bestätigen die Bildung von 1-Ethyl-3-methylimidazolium-tetrafluorobis(pentafluorethyl)phosphat. Die Ausbeute ist 92.0 % (Schmelzpunkt 60° C).

¹⁹F NMR (Referenz: CCl₃F - interner Standard; Lösungsmittel: CD₃CN) : -71.40 d,m (¹J_{P,F} = 914 Hz; PF₄); -82.18 quin,d,t (⁴J_{F,F} = 7.4 Hz, ³J_{P,F} = 2.4 Hz, ³J_{F,F} = 1 Hz; 2CF₃); - 118.80 d,quin,q (²J_{P,F} = 101 Hz, ³J_{F,F} =9.1 Hz; 2CF₂).
¹H NMR (Referenz: TMS ; Lösungsmittel: CD₃CN) : 1.47 t (³J_{H,H} = 7.3 Hz; CH₃); 3.82 s (CH₃); 4.17 q (CH₂); 7.32 d,d (³J_{H,H} = 2.3 Hz; ⁴J_{H,H} = 1.7 Hz 1 H); 7.37 d,d (1 H); 8.38 brs (1 H).
³¹P NMR (Referenz: 85 % H₃PO₄ in D₂O ; Lösungsmittel: CD₃CN) : -150.36 quin,quin,m; ¹J_{P,F} = 914 Hz, ²J_{P,F} = 101 Hz.

### Beispiel 6:

7.079 g (13.29 mmol) Tributylethylphosphonium-bis(pentafluorethyl)phosphinat werden mit einem Eisbad gekühlt und mit 10.0 g (500 mmol) Fluorwasserstoff (HF) versetzt. Die Reaktionsmischung wird 15 Minuten bei 0° C gerührt und dann in 20 cm³ Eiswasser geschüttet. Der Niederschlag wird abfiltriert, zweimal mit 10 cm³ Wasser gewaschen und an der Luft getrocknet. 7.324 g eines weißen festen Materials werden erhalten. ¹H, ³¹P und ¹⁹F NMR Spektroskopie bestätigen die Bildung von Tributylethylphosphonium-tetrafluorobis(pentafluorethyl)phosphat. Die Ausbeute ist 95.0 % (Schmelzpunkt 76° C).

¹⁹F NMR (Referenz: CCl₃F - interner Standard; Lösungsmittel: CD₃CN) : -71.40 d,m (¹J_{P,H} = 914 Hz; PF₄); -82.18 quin,d,t (⁴J_{F,F} = 7.2 Hz; ³J_{P,F} = 2.4 Hz; ³J_{F,F} = 1 Hz; 2CF₃); -118.80 d,quin,q (²J_{P,F} = 101 Hz; ³J_{F,F} = 8.9 Hz; 2CF₂).
¹H NMR (Referenz: TMS ; Lösungsmittel: CD₃CN) : 0.96 t (3CH₃); 1.19 d,t (³J_{H,P} = 18.2 Hz; ³J_{H,H} = 7.6 Hz; CH₃); 1.39-1.59 m (12H); 1.92-2.16 m (8H). ³¹P NMR (Referenz: 85 % H₃PO₄ in D₂O ; Lösungsmittel: CD₃CN) : 34.77 m; -150.36 quin,quin,m; ¹J_{P,F} = 914Hz; ²J_{P,F} = 101 Hz.

### Beispiel 7:

0.699 g (1.53 mmol) 1-Ethyl-3-methylimidazolium-bis(pentafluorethyl)tetrafluoro-phosphat und 0.290 g (2.17 mmol) Aluminiumtrichlorid werden in einem Teflonkolben bei Raumtemperatur und unter trockener Stickstoffatmosphäre miteinander vermischt. Die Mischung wird zähflüssig und ein leichter Anstieg der Temperatur wird beobachtet. Nach zweistündigem Rühren wird der Kolben evakuiert (0.1 mbar) und das flüchtige Produkt wird in einer mit flüssigem Stickstoff gekühlten Vorlage gesammelt. 0.439 g Bis(pentafluorethyl)trifluor-phosphoran werden erhalten. Die Ausbeute ist 88 %.

¹⁹F NMR (Referenz: CCl₃F - interner Standard; Lösungsmittel: CD₃CN-Film) : -49.85 d,m (¹J_{P,F} = 1143 Hz; PF₄); -81.09 brs (2CF₃); -116.78 d,m (²J_{P,F} = 127 Hz; 2CF₂).
³¹P NMR (Referenz: 85 % H₃PO₄ in D₂O ; Lösungsmittel: CD₃CN) : -39.05 q,quin,m ¹J_{P,F} = 1143 Hz; ²J_{P,F} = 127 Hz.

### Beispiel 8:

0.883 g (1.53 mmol) Tributylethylphosphonium-bis(pentafluorethyl)tetrafluoro-phosphat und 0.290 g (2.10 mmol) Aluminiumtrichlorid werden in einem Teflonkolben bei Raumtemperatur und unter trockener Stickstoffatmosphäre miteinander vermischt. Die Mischung wird zähflüssig und ein leichter Anstieg der Temperatur wird beobachtet; nach 30 Minuten wird die Mischung fest. Der Kolben wird evakuiert (0.1 mbar) und erhitzt, bis die Mischung schmilzt (ca. 50° C) und das flüchtige Produkt wird in einer mit flüssigem Stickstoff gekühlten Vorlage gesammelt. 0.305 g Bis(pentafluorethyl)trifluor-phosphoran werden erhalten. Die Ausbeute ist 61 %.

¹⁹F NMR (Referenz: CCl₃F - interner Standard; Lösungsmittel: CD₃CN-Film) : -49.85 d,m (¹J_{P,F} = 1143 Hz; PF₄); -81.09 brs (2CF₃); -116.78 d,m (²J_{P,F} = 127 Hz; 2CF₂).
³¹P NMR (Referenz: 85 % H₃PO₄ in D₂O ; Lösungsmittel: CD₃CN) : -39.05 q,quin,m ¹J_{P,F} = 1143 Hz; ²J_{P,F} = 127 Hz.

### Beispiel 9:

1.35 g (6.228 mmol) Antimonpentafluorid werden in einem Teflonkolben vorgelegt und 2.40 g (4.164 mmol) Tributylethylphosphonium-bis(pentafluorethyl)tetrafluoro-phosphat (hergestellt wie in Beispiel 6 beschrieben) werden unter Rühren der Reaktionsmischung mit einem Magnetrührer zugegeben. Die Mischung wird flüssig und für 30 Minuten auf 100° C erhitzt. Das flüchtige Produkte wird in einer Teflonfalle, die mit Trockeneis-Ethanol-Mischung gekühlt wird, kondensiert. Nach dem Erwärmen der Kühlfalle auf Raumtemperatur werden 1.31 g des flüssigen Bis(pentafluorethyl)trifluor-phosphorans erhalten. Die Ausbeute an (C₂F₅)₂PF₃ ist 96.5 % bezogen auf das Tributylethylphosphonium-bis(pentafluorethyl)-tetrafluoro-phosphat. Die NMR-Daten stimmen mit denen die für die Verbindung in Beispiel 8 erhalten wurde, überein.

Der Rückstand des Reaktionskolbens ist ein viskose Flüssigkeit - Tributylethylphosphonium-hexafluoroantimonat als Komplex mit überschüssigem SbF₅ (saure ionische Flüssigkeit): [(C₄H₉)₃(C₂H₅)P]⁺ SbF₆⁻ 0.50 SbF₅.

### Beispiel 11:

1.2 g Fluorwasserstoff (HF) werden mit einem Eisbad gekühlt und 0.80 g (2.5 mmol) Bis(pentafluorethyl)phosphinsaure methylester, (C₂F₅)₂P(O)OCH₃, zugegeben. Die Reaktionsmischung wird eine halbe Stunde bei 0° C gerührt. Der Überschuss von HF wird mittels Lüftung mit Stickstoff entfernt und der Rückstand im Vakuum von 1.3 Pa getrocknet. Man erhält 0.87 g Tetrafluorbis(pentafluorethyl)phosphorsäure, H⁺[(C₂F₅)₂PF₄]⁻, als Komplex mit Methanol.

¹⁹F NMR (Referenz: CCl₃F - interner Standard; Lock: CD₃CN-Film) : -73.32 d,m (¹J_{P,F} = 933 Hz; PF₄), -83.97 m (2CF₃); -119.68 d,quin (²J_{P,F} = 107 Hz; ³J_{F;F} = 8.3 Hz; 2CF₂).

¹H NMR (Referenz: TMS ; Lock: CD₃CN-Film) : 2.86 br.s, 7.27 br.s.

³¹P NMR (Referenz: 85% H₃PO₄ in D₂O; Lock: CD₃CN-Film): -148.8 quin,quin; ¹J_{P,F} = 932 Hz; ²J_{P,F} = 107 Hz.

## Patentansprüche

1. Verfahren zur Herstellung von Mono(fluoralkyl)- oder Bis(fluoralkyl)phosphorsäure, Mono(fluoralkyl)- oder Bis(fluoralkyl)phosphaten und deren korrespondierenden Phosphoranen umfassend zumindest die Umsetzung von einer Bis(fluoralkyl)phosphinsäure oder einer (Fluoralkyl)phosphonsäure oder einem korrespondierenden Derivat oder Salz dieser Säuren mit wasserfreiem Fluorwasserstoff.

2. Verfahren nach Anspruch 1,
**dadurch gekennzeichnet, dass**eine Bis(fluoralkyl)phosphinsäure oder ein korrespondierendes Derivat eingesetzt wird, bei dem die zwei Fluoralkylgruppen gleich oder verschieden sind.

3. Verfahren nach Anspruch 1 oder 2,
**dadurch gekennzeichnet, dass** eine Bis(Perfluoralkyl)phosphinsäure oder eine (Perfluoralkyl)phosphonsäure oder ein korrespondierendes Derivat dieser Säuren eingesetzt wird, bei dem die Perfluoralkylgruppen 1 bis 20 C-Atome enthalten und geradkettig oder verzweigt sind.

4. Verfahren nach einem oder mehreren der Ansprüche 1 bis 3,
**dadurch gekennzeichnet, dass** als Derivat der Bis(fluoralkyl)phosphinsäure oder der (Fluoralkyl)phosphonsäure das Salz mit einem ein-, zwei- oder dreiwertigen Metallkation eingesetzt wird.

5. Verfahren nach Anspruch 4,
**dadurch gekennzeichnet, dass**dasein-,zwei-oder dreiwertige Metallkation ausgewählt ist aus der Gruppe Li⁺, Na⁺, K⁺, Mg²⁺, Ca²⁺, Ba²⁺, Zn²⁺, Cu²⁺ oder Al³⁺.

6. Verfahren nach einem oder mehreren der Ansprüche 1 bis 3,
**dadurch gekennzeichnet, dass** als Derivat der Bis(fluoralkyl)phosphinsäure oder der (Fluoralkyl)phosphonsäure das Salz mit einem ein- oder zweiwertigen organischen Kation eingesetzt wird.

7. Verfahren nach Anspruch 6,
**dadurch gekennzeichnet, dass** das ein- oder zweiwertige organische Kation ausgewählt ist aus der Gruppe Tetraalkylammonium, Tetraalkylphosphonium, Triarylalkylphosphonium, Guanidinium, Pyrrolidinium, Pyridinium, Imidazolium, Piperazinium oder Hexamethylendiammonium.

8. Verfahren nach einem der Ansprüche 1 bis 3,
**dadurch gekennzeichnet, dass** als Derivat der Bis(fluoralkyl)phosphinsäure oder der (Fluoralkyl)phosphonsäure ein Ester der Bis(fluoralkyl)phosphinsäure oder der (Fluoralkyl)phosphonsäure eingesetzt wird.

9. Verfahren nach einem oder mehreren der Ansprüche 1 bis 3,
**dadurch gekennzeichnet, dass** als Derivat der Bis(fluoralkyl)phosphinsäure oder der (Fluoralkyl)phosphonsäure das Salz mit einem Polykation eingesetzt wird.

10. Verfahren nach Anspruch 9,
**dadurch gekennzeichnet, dass** das Polykation ausgewählt ist aus der Gruppe der Polyammonium-Kationen.

11. Verfahren nach einem oder mehreren der Ansprüche 1 bis 10,
**dadurch gekennzeichnet, dass** die Umsetzung in einem polaren Lösungsmittel oder ohne Lösungsmittel durchgeführt wird.

12. Verfahren nach einem oder mehreren der Ansprüche 1 bis 11,
**dadurch gekennzeichnet, dass** die Umsetzung bei einer Temperatur von -20° C bis 100° C durchgeführt wird.

13. Verfahren nach einem oder mehreren der Ansprüche 1 bis 12,
**dadurch gekennzeichnet, dass** die Umsetzung mit der 4 bis 100-fachen molaren Menge von Fluorwasserstoff durchgeführt wird.

14. Verfahren zur Herstellung von Phosphoranen nach einem oder mehreren der Ansprüche 1 bis 13,
**dadurch gekennzeichnet, dass** nach der Umsetzung mit Fluorwasserstoff das entstandene Mono- oder Bis(fluoralkyl)phosphat mit einem starken elektrophilen Reagenz oder einer starken Lewissäure umgesetzt wird.

15. Verfahren nach Anspruch 14,
**dadurch gekennzeichnet, dass** mit einem elektrophilen Reagenz oder einer Lewissäure ausgewählt aus der Gruppe (CH₃)₃SiCl, SO₂Cl₂, SbF₅, AlCl₃, VF₅, SbCl₅, NbF₅, AsF₅, BiF₅, AlF₃ und TaF₅ umgesetzt wird.

## Claims

1. Process for the preparation of mono(fluoroalkyl)- or bis(fluoroalkyl)phosphoric acid, mono(fluoroalkyl) or bis(fluoroalkyl) phosphates and the corresponding phosphoranes thereof, comprising at least the reaction of a bis(fluoroalkyl)phosphinic acid or a (fluoroalkyl)phosphonic acid or a corresponding derivative or salt of these acids with anhydrous hydrogen fluoride.

2. Process according to Claim 1,
**characterised in that** use is made of a bis(fluoroalkyl)phosphinic acid or a corresponding derivative in which the two fluoroalkyl groups are identical or different.

3. Process according to Claim 1 or 2,
**characterised in that** use is made of a bis(perfluoroalkyl)phosphinic acid or a (perfluoroalkyl)phosphonic acid or a corresponding derivative of these acids in which the perfluoroalkyl groups contain 1 to 20 C atoms and are straight-chain or branched.

4. Process according to one or more of Claims 1 to 3,
**characterised in that** the derivative of bis(fluoroalkyl)phosphinic acid or (fluoroalkyl)phosphonic acid employed is the salt with a mono-, di- or trivalent metal cation.

5. Process according to Claim 4,
**characterised in that** the mono-, di- or trivalent metal cation is selected from the group Li⁺, Na⁺, K⁺, Mg²⁺, Ca²⁺, Ba²⁺, Zn²⁺, Cu²⁺ or Al³⁺.

6. Process according to one or more of Claims 1 to 3,
**characterised in that** the derivative of bis(fluoroalkyl)phosphinic acid or (fluoroalkyl)phosphonic acid employed is the salt with a mono- or divalent organic cation.

7. Process according to Claim 6,
**characterised in that** the mono- or divalent organic cation is selected from the group tetraalkylammonium, tetraalkylphosphonium, triarylalkylphosphonium, guanidinium, pyrrolidinium, pyridinium, imidazolium, piperazinium or hexamethylenediammonium.

8. Process according to one of Claims 1 to 3,
**characterised in that** the derivative of bis(fluoroalkyl)phosphinic acid or (fluoroalkyl)phosphonic acid employed is an ester of bis(fluoroalkyl)phosphinic acid or of (fluoroalkyl)phosphonic acid.

9. Process according to one or more of Claims 1 to 3,
**characterised in that** the derivative of bis(fluoroalkyl)phosphinic acid or (fluoroalkyl)phosphonic acid employed is the salt with a polycation.

10. Process according to Claim 9,
**characterised in that** the polycation is selected from the group of polyammonium cations.

11. Process according to one or more of Claims 1 to 10,
**characterised in that** the reaction is carried out in a polar solvent or without solvent.

12. Process according to one or more of Claims 1 to 11,
**characterised in that** the reaction is carried out at a temperature of -20°C to 100°C.

13. Process according to one or more of Claims 1 to 12,
**characterised in that** the reaction is carried out with 4 to 100 times the molar amount of hydrogen fluoride.

14. Process for the preparation of phosphoranes according to one or more of Claims 1 to 13,
**characterised in that,** after the reaction with hydrogen fluoride, the mono- or bis(fluoroalkyl) phosphate formed is reacted with a strong electrophilic reagent or a strong Lewis acid.

15. Process according to Claim 14,
**characterised in that** the reaction is carried out with an electrophilic reagent or a Lewis acid selected from the group (CH₃)₃SiCl, SO₂Cl₂, SbF₅, AlCl₃, VF₅, SbCl₅, NbF₅, AsF₅, BiF₅, AlF₃ and TaF₅.

## Revendications

1. Procédé de préparation d'acide mono(fluoroalkyl)- ou bis(fluoroalkyl)-phosphorique, de phosphates de mono(fluoroalkyl) ou de bis(fluoroalkyl), et des phosphoranes correspondants de ceux-ci, comprenant au moins la réaction d'un acide bis(fluoroalkyl)phosphinique ou d'un acide (fluoroalkyl)phosphonique ou d'un dérivé correspondant ou sel de ces acides avec du fluorure d'hydrogène anhydre.

2. Procédé selon la revendication 1,
**caractérisé en ce que** l'on utilise un acide bis(fluoroalkyl)-phosphinique ou un dérivé correspondant dans lequel les deux groupements fluoroalkyle sont identiques ou différents.

3. Procédé selon la revendication 1 ou 2,
**caractérisé en ce que** l'on utilise un acide bis(perfluoroalkyl)-phosphinique ou un acide (perfluoroalkyl)phosphonique ou un dérivé correspondant de ces acides dans lequel les groupements perfluoroalkyle contiennent 1 à 20 atomes de C et sont à chaîne linéaire ou ramifiée.

4. Procédé selon une ou plusieurs parmi les revendications 1 à 3,
**caractérisé en ce que** le dérivé de l'acide bis(fluoroalkyl)-phosphinique ou de l'acide (fluoroalkyl)phosphonique employé est le sel avec un cation métallique mono-, di- ou trivalent.

5. Procédé selon la revendication 4,
**caractérisé en ce que** le cation métallique mono-, di- ou trivalent est choisi parmi le groupe constitué par Li⁺, Na⁺, K⁺, Mg²⁺, Ca²⁺, Ba²⁺, Zn²⁺, Cu²⁺ ou Al³⁺.

6. Procédé selon une ou plusieurs parmi les revendications 1 à 3,
**caractérisé en ce que** le dérivé de l'acide bis(fluoroalkyl)-phosphinique ou de l'acide (fluoroalkyl)phosphonique employé est le sel avec un cation organique mono- ou divalent.

7. Procédé selon la revendication 6,
**caractérisé en ce que** le cation organique mono- ou divalent est choisi parmi le groupe constitué par tétraalkylammonium, tétraalkylphosphonium, triarylalkylphosphonium, guanidinium, pyrrolidinium, pyridinium, imidazolium, pipérazinium ou hexaméthylènediammonium.

8. Procédé selon l'une parmi les revendications 1 à 3,
**caractérisé en ce que** le dérivé de l'acide bis(fluoroalkyl)-phosphinique ou de l'acide (fluoroalkyl)phosphonique employé est un ester de l'acide bis(fluoroalkyl)phosphinique ou de l'acide (fluoroalkyl)-phosphonique.

9. Procédé selon une ou plusieurs parmi les revendications 1 à 3,
**caractérisé en ce que** le dérivé de l'acide bis(fluoroalkyl)-phosphinique ou de l'acide (fluoroalkyl)phosphonique employé est le sel avec un polycation.

10. Procédé selon la revendication 9,
**caractérisé en ce que** le polycation est choisi parmi le groupe constitué par les cations polyammonium.

11. Procédé selon une ou plusieurs parmi les revendications 1 à 10,
**caractérisé en ce que** la réaction est effectuée dans un solvant polaire ou sans solvant.

12. Procédé selon une ou plusieurs parmi les revendications 1 à 11,
**caractérisé en ce que** la réaction est effectuée à une température allant de -20°C à 100°C.

13. Procédé selon une ou plusieurs parmi les revendications 1 à 12,
**caractérisé en ce que** la réaction est effectuée avec de 4 à 100 fois la quantité molaire de fluorure d'hydrogène.

14. Procédé de préparation de phosphoranes selon une ou plusieurs parmi les revendications 1 à 13,
**caractérisé en ce que,** après la réaction avec le fluorure d'hydrogène, le phosphate de mono- ou bis(fluoroalkyl) formé est réagi avec un réactif électrophile fort ou un acide de Lewis fort.

15. Procédé selon la revendication 14,
**caractérisé en ce que** la réaction est effectuée avec un réactif électrophile ou un acide de Lewis choisi parmi le groupe constitué par (CH₃)₃SiCl, SO₂Cl₂, SbF₅, AlCl₃, VF₅, SbCl₅, NbF₅, AsF₅, BiF₅, AlF₃ et TaF₅.
